# EUROPÄISCHE PATENTSCHRIFT

(11) **EP 2 707 680 B1**
(45) Veröffentlichungstag und Bekanntmachung des Hinweises auf die Patenterteilung: **11.12.2019**
(21) Anmeldenummer: 12722702.3
(22) Anmeldetag: 10.05.2012
(51) Int. Cl.: G01F 25/00, B01L 3/02, G01F 11/02, G01F 23/296

(54) **VERFAHREN ZUR REGELUNG EINER IN EINER PIPETTENSPITZE VORHANDENEN MENGE AN DOSIERFLÜSSIGKEIT MITTELS SCHWINGUNGSERFASSUNG UND PIPETTIERVORRICHTUNG**
METHOD OF ADJUSTING THE AMOUNT OF DOSING LIQUID IN A PIPETTE TIP BY THE HELP OF VIBRATION DETECTION AND PIPETTING APPARATUS FOR CARRYING OUT THE METHOD
PROCEDE D'AJUSTEMENT DE LA QUANTITE D'UN LIQUIDE A DOSER DANS UN EMBOUT D'UNE PIPETTE PAR DETECTION DE VIBRATIONS ET DISPOSITIF POUR EXECUTER LE PROCEDE

(30) Priorität: 13.05.2011 DE 102011075828
(43) Veröffentlichungstag der Anmeldung: 19.03.2014
(73) Patentinhaber: Hamilton Bonaduz AG, 7402 Bonaduz (CH)
(72) Erfinder: KIRSTE, Vinzenz, 55270 Zornheim (DE); MÜLLER, Jonas, CH-8808 Pfäffikon (CH); KRAMM, Joel, CH-7000 Chur (CH)
(74) Vertreter: Ruttensperger Lachnit Trossin Gomoll
(86) Internationale Anmeldenummer: PCT/EP2012/058680
(87) Internationale Veröffentlichungsnummer: WO 2012/156281

(56) Entgegenhaltungen:
- DE-A1-102004 052 832
- DE-A1-102008 009 626
- DE-T2- 69 320 632
- US-A- 5 465 629

## Beschreibung

Die vorliegende Erfindung betrifft ein Verfahren zur Bestimmung einer durch eine Dosieröffnung einer Pipettenspitze in ein Aufnahmevolumen der Pipettenspitze aspirierten oder/und aus dem Aufnahmevolumen der Pipettenspitze dispensierten Menge an Dosierflüssigkeit gemäß dem Oberbegriff von Anspruch 1.

Die vorliegende Erfindung betrifft außerdem eine Pipettiervorrichtung, welche zur Ausführung eines solchen Verfahrens ausgebildet ist.

Ein derartiges Verfahren und eine zu dessen Durchführung ausgebildete Pipettiervorrichtung sind beispielsweise aus der WO2009/103392 A1 bekannt.

Diese Druckschrift lehrt, Ultraschall in die Wandung eines Saugrohrs einer Pipettiervorrichtung einzukoppeln und frequenzabhängig die Dämpfung des Ultraschallsignals zu messen. Durch Vergleich der gemessenen frequenzabhängigen Dämpfung mit einer Referenzmessung der frequenzabhängigen Dämpfung oder mit einer auf Referenzmessungen basierenden Kalibrierkurve kann gemäß dem bekannten Verfahren bestimmt werden, ob die Pipettenspitze funktionsfähig ist oder/und ob die Pipettenspitze eine Dosierflüssigkeit enthält oder berührt. Die Druckschrift des Standes der Technik schlägt zur Einkopplung von Ultraschall in das Saugrohr und zur Messung der Dämpfung des Ultraschallsignals Piezokristalle vor.

Durch Vergleich des frequenzabhängigen Dämpfungssignals mit der wenigstens einen Referenzmessung oder mit zu einer Kalibrierkurve kombinierten Referenzmessungen kann außerdem auf die Eintauchtiefe einer Pipettenspitze in die Dosierflüssigkeit geschlossen werden oder kann auf die in der Pipettenspitze vorhandene Flüssigkeitsmenge geschlossen werden.

Das bekannte Verfahren bietet somit den Vorteil, die Eintauchtiefe oder die in eine Pipettenspitze aspirierte Dosierflüssigkeitsmenge zu bestimmen, ohne dass dadurch die aspirierte Dosierflüssigkeit der Gefahr einer Verunreinigung ausgesetzt werden muss.

Allerdings lehrt das bekannte Verfahren nur, nach Ende eines Aspirationsvorgangs die in einer Pipettenspitze aufgenommene Menge an Dosierflüssigkeit zu bestimmen.

DE 693 20 632 T2 und US 5 465 629 A beziehen sich auf ein System zum Ansaugen und Abgeben von Flüssigkeit mit Hilfe einer Einweg-Pipettenspitze und auf ein Verfahren zur Steuerung der Bewegung einer Pipette in einem derartigen System. Zudem kann das System mittels einer akustischen Einrichtung feststellen, ob ein gewünschter Flüssigkeitsspiegel in der Pipettenspitze vorhanden ist.

Die Druckschrift DE 10 2004 052 832 A1 offenbart ein Regelungsverfahren zum Dosieren von Flüssigkeitsvolumina, bei welchem ein in einer Probenaufnahme ermitteltes aufgenommenes Volumen einer Flüssigkeit mit einem Vorgabewert des aufzunehmenden Volumens verglichen wird, wobei dann, wenn der Vorgabewert durch das aufgenommene Volumen erreicht wird, der zur Flüssigkeitsaufnahme in der Probenaufnahme angelegte Unterdruck schlagartig abgebaut und somit eine weitere Flüssigkeitsaufnahme verhindert wird.

Es ist eine Aufgabe der vorliegenden Erfindung, die aus dem Stand der Technik bekannte technische Lehre weiterzubilden.

Diese Aufgabe wird gemäß der vorliegenden Erfindung durch ein Verfahren mit allen Merkmalen des Anspruchs 1 gelöst. Erfindungsgemäß ist das eingangs genannte Verfahren ein Regelungsverfahren, bei welchem das Bereitstellen der wenigstens einen Referenzgröße folgenden Schritt umfasst:
- Ermitteln der wenigstens einen Referenzgröße derart, dass sie eine gewünschte, zum Ermittlungszeitpunkt von einer im Aufnahmevolumen vorhandenen Ist-Dosierflüssigkeitsmenge abweichende Soll-Dosierflüssigkeitsmenge repräsentiert,
wobei die eingangs genannten Schritte des Anregens der Schwingungsform, der Erfassung der wenigstens einen angeregten Größe und des Vergleichs derselben mit der wenigstens einen Referenzgröße iterativ solange während einer Aspiration von Dosierflüssigkeit bei in Dosierflüssigkeit eingetauchter Pipettieröffnung oder während einer Dispensation von Dosierflüssigkeit wiederholt werden, bis die wenigstens eine erfasste Größe mit der wenigstens einen Referenzgröße übereinstimmt.

Zum Regelungsverfahren weitergebildet gestattet das erfindungsgemäße Verfahren eine kontinuierliche Überprüfung der Ist-Dosierflüssigkeitsmenge in der Pipettenspitze, was zum einen die hochgenaue Aufnahme von Flüssigkeitsmengen beim Aspirieren ermöglicht und was zum anderen die hochgenaue Abgabe von Flüssigkeitsmengen beim Dispensieren ermöglicht, insbesondere die Abgabe von Flüssigkeitsmengen, welche geringer sind als die gesamte in der Pipettenspitze aufgenommene Dosierflüssigkeitsmenge.

Hierzu wird die wenigstens eine Referenzgröße derart ermittelt, dass sie eine Soll-Dosierflüssigkeitsmenge repräsentiert, welche von der zum Ermittlungszeitpunkt tatsächlich im Aufnahmevolumen der Pipettenspitze vorhandenen Ist-Dosierflüssigkeitsmenge abweicht.

Diese Repräsentation einer Soll-Dosierflüssigkeitsmenge durch die wenigstens eine Referenzgröße ist gemäß der vorliegenden Anmeldung in einem sehr allgemeinen Sinne zu verstehen, der über eine bloße Zuordnung konkreter Zahlenwerte von Größen hinausgeht, wenngleich auch die Zuordnung konkreter Zahlenwerte von Referenzgröße und Soll-Dosierflüssigkeitsmenge im vorliegenden Fall nicht ausgeschlossen sein soll.

Wie weiter unten noch ausführlich gezeigt werden wird, kann die Repräsentation der Soll-Dosierflüssigkeitsmenge durch die wenigstens eine Referenzgröße im Sinne der vorliegenden Anmeldung jedoch von einem konkreten Wert unabhängig auch durch einen charakteristischen Verlauf der wenigstens einen Referenzgröße in Abhängigkeit von einer weiteren Größe erfolgen.

Nachdem die wenigstens eine Referenzgröße ermittelt wurde, reicht es aus, nur noch die Schritte des Anregens der Schwingungsform, der Erfassung der wenigstens einen angeregten Größe und des Vergleichs derselben mit der wenigstens einen Referenzgröße iterativ zu wiederholen, und zwar bis die wenigstens eine erfasste Größe mit der wenigstens einen Referenzgröße übereinstimmt.

Dabei hat sich überraschend gezeigt, dass die Information über die im Aufnahmevolumen der Pipettenspitze vorhandene Dosierflüssigkeitsmenge durch Anregen und Erfassen einer Schwingungsform wenigstens eines Schwingungsabschnitts der Pipettenspitze auch dann erhalten werden kann, wenn die Pipettenspitze in Dosierflüssigkeit eingetaucht ist.

Dies war keinesfalls zu erwarten, denn durch das Eintauchen der Pipettenspitze, also ihrer Pipettieröffnung und des der Pipettieröffnung nahen Bereichs, in die Dosierflüssigkeit wird das Schwingungsverhalten der Pipettenspitze durch die die Pipettenspitze von außen benetzende Dosierflüssigkeit in großem Umfang verändert. Insbesondere erfährt die Schwingung der Pipettenspitze durch das Eintauchen in die Dosierflüssigkeit eine wesentlich höhere Dämpfung als bei nicht eingetauchtem Zustand.

Gleichwohl haben die Erfinder der hier vorgestellten Erfindung herausgefunden, dass die im Aufnahmevolumen der Pipettenspitze vorhandene Ist-Dosierflüssigkeitsmenge auch bei in Dosierflüssigkeit eingetauchter Pipettenöffnung durch Auswertung des Schwingungsverhaltens erhaltbar ist.

Dabei hat sich überraschend gezeigt, das das vorliegend beschriebene Verfahren unabhängig von der Güte der Schwingungskopplung zwischen Schwingungsanregungseinrichtung oder Schwingungssensor einerseits und Schwingungsabschnitt andererseits funktioniert. Gerade bei der Verwendung von Wechselpipettenspitzen kann nämlich die Güte der Schwingungskopplung aufgrund von Fertigungstoleranzen erheblich schwanken.

Diese vorteilhafte Unabhängigkeit von der Kopplungsgüte liegt daran, dass eben nicht nur eine strenge Wertezuordnung zwischen Soll-Dosierflüssigkeitsmenge und Referenzgröße als Repräsentation der ersteren durch die letztgenannte anzusehen ist, sondern die Soll-Dosierflüssigkeitsmenge im Sinne der vorliegenden Erfindung durch die wenigstens eine Referenzgröße auch durch charakteristische Werteverläufe repräsentiert werden kann, die qualitativ erhalten bleiben, obwohl die wenigstens eine Referenzgröße bei einer unbekannten und in der Regel von jener des aktuellen Dosiervorgangs abweichenden Schwingungskopplungsgüte ermittelt wurde.

Allerdings ist es für die Genauigkeit der mit dem vorliegenden Verfahren erzielbaren Pipettierergebnisse vorteilhaft, wenn der Pipettiervorgang, also der Aspirations- oder/und Dispensationsvorgang bei jener Eintauchtiefe der Pipettenspitze in einen Vorrat von Dosierflüssigkeit erfolgt, bei welcher auch die wenigstens eine Referenzgröße bestimmt wurde. Die Eintauchtiefen der Pipettenspitzen in Dosierflüssigkeit beim Aspirieren oder/und Dispensieren sollen also beim aktuellen Pipettiervorgang und beim Referenzdosiervorgang, bei welchem die wenigstens eine Referenzgröße bestimmt wurde, im Wesentlichen übereinstimmen.

Daher kann das vorliegende Verfahren zur Erhöhung der erreichbaren Dosiergenauigkeit vorteilhafterweise den weiteren Schritt eines Ermittelns einer der wenigstens einen Referenzgröße zugeordneten Referenzeintauchtiefe und das Einstellen der Eintauchtiefe der Pipettenspitze beim aktuellen Pipettiervorgang auf die Referenzeintauchtiefe umfassen.

Dann, wenn die aspirierte oder/und dispensierte Menge an Dosierflüssigkeit verglichen mit der Menge an Dosierflüssigkeit des Dosierflüssigkeitsvorrats, in welchen die Pipettenspitze während des Dosiervorgangs eingetaucht ist, sehr klein ist, stellt sich durch die Aspiration oder/und Dispensation der verglichen mit dem Dosierflüssigkeitsvorrat geringen Menge an Dosierflüssigkeit im Wesentlichen keine Änderung des Dosierflüssigkeitsspiegels relativ zur Pipettenspitze und damit im Wesentlichen keine Änderung der Eintauchtiefe während des Aspirierens oder/und des Dispensierens ein.

Dann jedoch, wenn die beim aktuellen Aspirieren oder/und Dispensieren aufgenommene bzw. abgegebene Menge an Dosierflüssigkeit dieselbe Größenordnung aufweist wie die Menge an Dosierflüssigkeitsvorrat, in welche die Pipettenspitze beim Pipettieren eingetaucht ist, kann sich während des Aspirierens oder/und Dispensierens die Lage des Dosierflüssigkeitsspiegels im Vorrat und damit die Eintauchtiefe der Pipettenspitze in den Dosierflüssigkeitsvorrat ändern. Um diesen Effekt, der grundsätzlich geeignet ist, die erreichbare Dosiergenauigkeit zu verringern, zu vermeiden, kann das erfindungsgemäße Verfahren gemäß einer vorteilhaften Weiterbildung den Schritt eines Nachführens der Pipettenspitze während einer Aspiration oder/und einer Dispensation von Dosierflüssigkeit auf die Referenzeintauchtiefe umfassen.

Im Falle eines Dispensationsvorgangs kann die Referenzeintauchtiefe auch Null sein, d. h. die Pipettenspitze kann in ihrem Aufnahmevolumen aufgenommene Dosierflüssigkeit auch in nicht in Dosierflüssigkeit eingetauchtem Zustand abgeben.

Das Ermitteln der wenigstens einen Referenzgröße umfasst das Ermitteln oder Auswählen einer Referenzgrößenkurve, wobei eine Referenzgrößenkurve im Sinne der vorliegenden Anmeldung eine Abbildung der Abhängigkeit einer Referenzgröße von einer weiteren Größe ist. Erfindungsgemäß wird als die wenigstens eine Referenzgröße eine Schar von Referenzgrößenkurven bereitgestellt, so dass dann das Verfahren den Schritt eines Auswählens einer Referenzgrößenkurve aus einer Schar von Referenzgrößenkurven umfasst. Mit dieser Auswahl kann eine passende Referenzgrößenkurve mit geringem Aufwand aus einer Mehrzahl von Referenzgrößenkurven zutreffend ausgewählt werden.

Als "Schar" von Referenzgrößenkurven ist im Sinne der vorliegenden Anmeldung eine Mehrzahl von gleichartigen Referenzgrößenkurven zu verstehen, die stets die Abhängigkeit derselben Referenzgröße von derselben weiteren Größe abbilden, sich jedoch durch unterschiedliche Werte ein- und desselben Scharparameters unterscheiden. Trägt man die Referenzgrößenkurve in einem karthesischen Koordinatensystem auf mit der Referenzgröße als Ordinate und der weiteren Größe als Abszisse und würde man den Scharparameter auf einer zu Abszisse und Ordinate orthogonalen dritten Koordinatenachse auftragen, so ließe sich die Schar von Referenzgrößenkurven als Referenzgrößenfläche in einem derartigen Koordinatensystem abbilden.

Weiterhin kann zur möglichst umfänglichen Hinterlegung der wenigstens einen Referenzgröße daran gedacht sein, dass mehrere Scharen von Referenzgrößenkurven in einer Gruppe von Referenzgrößenkurvenscharen hinterlegt sein können. In diesem Falle kann das Verfahren den Schritt eines Auswählens einer Schar von Referenzgrößenkurven aus einer Gruppe von Referenzgrößenkurvenscharen umfassen.

So wie sich die Referenzgrößenkurven einer Schar durch unterschiedliche Scharparameter unterscheiden, unterscheiden sich unterschiedliche Referenzgrößenkurvenscharen innerhalb einer solchen Gruppe durch unterschiedliche Werte eines Gruppenparameters. Ein derartiger Gruppenparameter kann beispielsweise die Schwingungsmode des Schwingungsabschnitts oder/und die Dosierflüssigkeit sein.

So kann beispielsweise für jede für eine Dosierung in Frage kommende Dosierflüssigkeit eine Referenzgrößenkurvenschar hinterlegt sein. Ebenso kann für jede an der Pipettenspitze anregbare Schwingungsmode eine Referenzgrößenkurvenschar hinterlegt sein, denn es ist leicht einzusehen, dass angeregte Longitudinalschwingungen der Pipettenspitze, also Schwingungen der Pipettenspitze längs einer Pipettenspitzenlängsachse, hinsichtlich der anregbaren Frequenzen, Amplituden, der auftretenden Phasenverschiebungen usw. völlig andere Werte aufweisen können als angeregte Torsionsschwingungen um die Pipettenspitzenlängsachse oder angeregte Transversalschwingungen der Pipettenspitze orthogonal zur Pipettenspitzenlängsachse.

Ebenso ist einsehbar, dass unterschiedlich viskose oder/und unterschiedlich dichte Dosierflüssigkeiten bei ihrer Aufnahme im Aufnahmeraum der Pipettenspitze zu einer unterschiedlichen Beeinflussung des Schwingungsverhaltens der Pipettenspitze in Abhängigkeit von der aufgenommenen Dosierflüssigkeitsmenge führen.

Weiterhin kann mit der hier diskutierten Weiterbildung der vorliegenden Erfindung erreicht werden, dass ein- und dieselbe Dosierflüssigkeit in Abhängigkeit von der jeweils im Aufnahmeraum der Pipettenspitze vorhandenen Ist-Dosierflüssigkeitsmenge mit unterschiedlichen Schwingungsmoden erfasst wird, also beispielsweise ein erster Mengenbereich, welcher von einer Ist-Dosierflüssigkeitsmenge von Null bis zu einem ersten niedrigeren Schwellenwert der Ist-Dosierflüssigkeitsmenge reicht, mit einer ersten Schwingungsmode erfasst wird, ein zweiter mittlerer Mengenbereich, welcher von dem ersten niedrigeren Schwellenwert bis zu einem zweiten höheren Schwellenwert reicht, mit einer zweiten, von der ersten verschiedenen Schwingungsmode erfasst wird, und ein dritter hoher Mengenbereich überhalb des zweiten höheren Schwellenwerts von einer von den ersten beiden Schwingungsmoden verschiedenen dritten Schwingungsmode erfasst wird. Die Schwingungsmoden können dabei unterschiedlichen Schwingungsarten, wie etwa Longitudinalschwingung, Torsionsschwingung und Transversalschwingung zugeordnet sein.

Eine besonders vorteilhafte, weil von der äußeren Dämpfung durch das Eintauchen der Pipettenspitze qualitativ nicht oder nicht besonders stark beeinflusste Referenzgröße ist die Phasenverschiebung zwischen angeregter Schwingungsform und Anregungsschwingungsform, also anregender Schwingungsform. Daher ist für eine möglichst genaue Regelung der Ist-Dosierflüssigkeitsmenge auf die Soll-Dosierflüssigkeitsmenge hin erfindungsgemäß vorgesehen, dass die Referenzgrößenkurven Funktionen der Phasenverschiebung zwischen angeregter Schwingungsform und Anregungsschwingungsform in Abhängigkeit von der Dosierflüssigkeitsmenge im Aufnahmevolumen sind.

Ebenso kann jedoch die Amplitude der angeregten Schwingungsform als Referenzgröße verwendet werden, wenngleich diese einem stärkeren quantitativen Einfluss durch die auf die in die Dosierflüssigkeit eingetauchte Pipettenspitze einwirkende äußere Dämpfung unterliegt. Dennoch kann, gerade weil die Referenzgröße die Soll-Dosierflüssigkeitsmenge nicht durch einen konkreten Zahlenwert zu repräsentieren braucht, auch dann ein sehr gutes und hochgenaues Regelungsergebnis beim Pipettieren erzielt werden, wenn die Referenzgrößenkurven Funktionen der Amplitude der angeregten Schwingungsform in Abhängigkeit von der Dosierflüssigkeitmenge im Aufnahmevolumen sind, was deshalb als erfindungsgemäße Alternative zu den zuvor genannten Funktionen der Phasenverschiebung als Referenzgrößenkurven vorgesehen ist.

Ein wesentlicher Vorteil des hier diskutierten erfindungsgemäßen Verfahrens liegt in der Möglichkeit, eine Soll-Dosierflüssigkeitsmenge durch die wenigstens eine Referenzgröße nicht nur mittels eines konkreten Referenzgrößenzahlenwerts, sondern durch einen charakteristischen Verlauf einer Referenzgrößenkurve exakt zu repräsentieren. Hierzu umfasst der Schritt des Ermittelns der wenigstens einen Referenzgröße erfindungsgemäß einen Unterschritt, in welchem eine Referenzgrößenkurve derart bestimmt wird, dass sie bei der Soll-Dosierflüssigkeitsmenge einen charakteristischen Verlaufspunkt aufweist, wobei das Bestimmen einer Referenzgrößenkurve das Auswählen einer Referenzgrößenkurve aus einer Referenzgrößenkurvenschar ist. Als charakteristische Verlaufspunkte kommen insbesondere Extrempunkte, wie Maxima oder/und Minima, Wendepunkte, Terrassenpunkte als besondere Art der Wendepunkte und dergleichen in Frage.

Weiter weist dann der Schritt des Ermittelns der wenigstens einen Referenzgröße erfindungsgemäß den weiteren Unterschritt eines Bestimmens des dieser Referenzgrößenkurve zugeordneten charakteristischen Verlaufpunkts als die wenigstens eine Referenzgröße auf.

Der oben beschriebene Vorteil beruht im Wesentlichen darauf, dass zur Regelung eines Pipettier- bzw. Dosiervorgangs bei in die Dosierflüssigkeit eingetauchter Pipettenspitze, also bei an ihrer Außenfläche mit Dosierflüssigkeit benetzter Pipettenspitze, dennoch eine Referenzgrößenkurve verwendet werden kann, welche mit einer anderen Pipettenspitze oder mit einer Pipettenspitze mit einer vom aktuellen Pipettiervorgang abweichenden Schwingungskopplungsgüte, jedoch bei im Wesentlichen gleichem Eintauchzustand ermittelt wurde. Mit anderen Worten: Für den Zusammenhang zwischen der Referenzgrößenkurve und der zugeordneten Kurve der beim Dosiervorgang erfassten wenigstens einen Größe der angeregten Schwingungsform kommt es auf die Güte der Schwingungskopplung zwischen der Schwingungsanregungseinrichtung oder dem Schwingungssensor einerseits und dem Schwingungsabschnitt beziehungsweise der Pipettenspitze andererseits überraschenderweise nicht an.

Zwar ist die Pipettenspitze bei unterschiedlichen Schwingungskopplungsgüten mit unterschiedlichen Dämpfungen behaftet, so dass die erfasste Größe der angeregten Schwingung bei unterschiedlichen Kopplungsgüten aber bei gleichem Eintauchzustand und gleicher aufgenommener Ist-Dosierflüssigkeitsmenge unterschiedliche Zahlenwerte liefert. Die Erfinder des vorliegend diskutierten Verfahrens haben jedoch erkannt, dass die Größenkurven der erfassten Größe der angeregten Schwingungsform ungeachtet der Schwingungskopplungsgüte charakteristische Verlaufspunkte bei gleichen Abszissenwerten aufweisen können.

Zwar liegt also bei unterschiedlichen Kopplungsgüten ein Extremwert oder ein Wendepunkt oder ein sonstiger charakteristischer Verlaufspunkt stets bei unterschiedlichen, im Grunde nicht vorhersagbaren Ordinatenwerten. Jedoch treten die Extrempunkte, Wendepunkte bzw. sonstigen charakteristischen Verlaufspunkte stets bei demselben Abszissenwert auf.

Wählt man daher die Referenzgrößenkurven derart, dass sie die Dosierflüssigkeitsmenge als Abszissenwert aufweisen, kann das oben beschriebene Auswählen einer Referenzgrößenkurve bzw. das Bestimmen einer Referenzgrößenkurve vorteilhafterweise derart erfolgen, dass jene Referenzgrößenkurve aus einer Mehrzahl von Referenzgrößenkurven ausgewählt wird, welche bei dem gewünschten Soll-Dosierflüssigkeitsmengenwert einen charakteristischen Verlaufspunkt aufweist. Aufgrund der vor dem zu regelnden Pipettiervorgang nicht bekannten Kopplungsgüte der Kopplung einer Schwingungsanregungsquelle oder/und eines Schwingungssensors mit der konkret verwendeten Pipettenspitze sind zwar dann die Ordinatenwerte der erfassten wenigstens einen Größe nicht vorhersagbar, jedoch wird auch die Verlaufskurve der wenigstens einen erfassten Größe, wie die Referenzgrößenkurve, dieselbe Art von charakteristischem Verlaufspunkt bei der gewünschten Soll-Dosierflüssigkeitsmenge zeigen. Aus diesem Grunde kann mit dem hier vorgeschlagenen Verfahren auch in Unkenntnis der zu erwartenden Zahlenwerte der wenigstens einen erfassten Größe der angeregten Schwingungsform ein mit hoher Genauigkeit funktionierender Regelkreis verwendet werden.

Es war oben bereits von einer Auswahl einer Referenzgrößenkurve aus einer Schar von Referenzgrößenkurven die Rede. Dabei bietet sich die Anregungsfrequenz, mit welcher eine Schwingungsform an dem wenigstens einen Schwingungsabschnitt der Pipettenspitze angeregt wird, als Scharparameter an. Dies bedeutet, es liegt eine Mehrzahl von Referenzgrößenkurven vor, die stets die Abhängigkeit einer charakteristischen Schwingungsgröße von der im Aufnahmevolumen aufgenommenen Dosierflüssigkeitsmenge darstellen, wobei jede Referenzgrößenkurve mit einer anderen Anregungsfrequenz ermittelt wurde. Da sich mit der im Aufnahmevolumen aufgenommenen Dosierflüssigkeitsmenge die Gesamtmasse der Pipettenspitze ändert, ändert sich damit auch die Eigenfrequenz der Pipettenspitze, so dass die Anregungsfrequenz einen hochauflösenden Scharparameter zur Auflösung unterschiedlicher aufgenommener Dosierflüssigkeitsmengen darstellt.

Daher umfasst das erfindungsgemäße Verfahren den Schritt eines Auswählens einer Anregungsfrequenz nach Maßgabe der Schar von Referenzgrößenkurven. Mit der Auswahl einer für die zu erfüllende Pipettieraufgabe möglichst geeigneten Referenzgrößenkurve wird somit erfindungsgemäß auch die für den Regelungsvorgang vorteilhafteste Anregungsfrequenz ermittelt.

Zusätzlich oder alternativ können Referenzgrößenkurven bereitgestellt sein, die die Phasenverschiebung zwischen angeregter und anregender Schwingung oder die Amplitude der angeregten Schwingung in Abhängigkeit von der Frequenz der anregenden Schwingung abbilden. Die aufgenommene Dosierflüssigkeitsmenge kann dann der Scharparameter sein.

Hier sind Piezoaktoren/Sensoren als Schwingungsanregungseinrichtung oder/und als Schwingungssensoren von Vorteil, da diese Piezoaktoren/Sensoren mit unterschiedlichen Anregungsfrequenzen anregen können und ebenso unterschiedliche Schwingungsformen zu erfassen in der Lage sind. Außerdem kann mit ein- und demselben Piezoelement sowohl eine Schwingungsform angeregt als auch erfasst werden.

Wie oben bereits angedeutet wurde, erfolgt erfindungsgemäß das Auswählen einer Anregungsfrequenz nach Maßgabe der Schar von Referenzgrößenkurven in folgenden Unterschritten:
- Bestimmen einer Referenzgrößenkurve, welche bei der Soll-Dosierflüssigkeitsmenge einen charakteristischen Verlaufspunkt, wie etwa Extrempunkt, Wendepunkt, Terrassenpunkt oder dgl., aufweist,
- Bestimmen der dieser Referenzgrößenkurve zugeordneten Anregungsfrequenz,
- Auswählen dieser Anregungsfrequenz als der beim Anregen der Schwingungsform zu verwendenden Anregungsfrequenz.

In dem hier erfindungsgemäß vorgeschlagenen Regelungsverfahren mit zahlenwertunabhängigen Regelgrößen umfasst dann der eingangs genannte Schritt des Vergleichens von erfasster Größe und Referenzgröße einen Unterschritt eines Bestimmens, ob die erfasste Größe einen charakteristischen Verlaufspunkt, wie etwa Extrempunkt, Wendepunkt, Terrassenpunkt und dergleichen, aufweist, welcher dem als die wenigstens eine Referenzgröße bestimmten charakteristischen Verlaufspunkt entspricht.

Die Entsprechung von charakteristischen Verlaufspunkten in den beiden für die hier beschriebene Regelung relevanten Kurven kann dann besonders leicht festgestellt werden, wenn ein charakteristischer Verlaufspunkt in der betreffenden Kurve nur ein einziges Mal vorkommt, beispielsweise beide Kurven jeweils nur einen gleichartigen Extrempunkt aufweisen.

Aber auch dann, wenn charakteristische Verlaufspunkte mehrfach auftreten, etwa mehrere lokale Minima und Maxima vorhanden sind, kann aus der Abfolge von Verlaufspunkten eine Zuordnung der charakteristischen Verlaufspunkte zwischen Referenzgrößenkurve und Kurve der wenigstens einer erfassten Größe hergestellt werden.

Um einen charakteristischen Verlaufspunkt zuverlässig als solchen erkennen zu können, ist erfindungsgemäß vorgesehen, dass das Aspirieren oder/und Dispensieren von Dosierflüssigkeit zunächst über das Erreichen der Soll-Dosierflüssigkeitsmenge im Aufnahmevolumen hinaus fortgesetzt wird.

Die so überdosierte Menge kann nachfolgend durch den dann eindeutig erkannten charakteristischen Verlaufspunkt als Zielgröße einfach korrigiert werden.

Die eingangs genannte Aufgabe wird außerdem gelöst durch eine Pipettiervorrichtung, welche zur Ausführung des vorstehend beschriebenen Verfahrens ausgebildet ist.

Nachfolgend wird die vorliegende Erfindung anhand der beiliegenden Zeichnungen näher beschrieben werden. Es stellt dar:
- Fig. 1: eine grobschematische Teilschnittansicht durch eine erfindungsgemäße Pipettiervorrichtung mit einem Pipettierrohr und einer daran angekoppelten Pipettenspitze, welche mit ihrer Pipettieröffnung in einen Vorrat von Dosierflüssigkeit eingetaucht ist und in deren Aufnahmevolumen eine Ist-Dosierflüssigkeitsmenge aufgenommen ist,
- Fig. 2: ein erstes Beispiel für eine mögliche Referenzkurvenschar zur Verwendung in einem erfindungsgemäßen Verfahren und
- Fig. 3: ein zweites Beispiel für eine mögliche Referenzkurvenschar als von dem vorliegenden Anspruch 1 nicht gedecktes Anschauungsbeispiel.

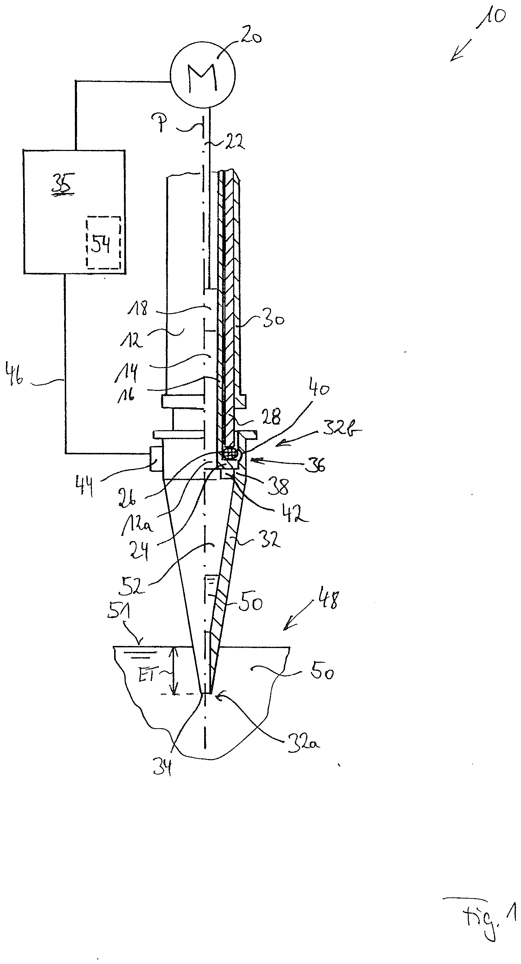

In Fig. 1 ist eine Pipettiervorrichtung allgemein mit 10 bezeichnet. Die Pipettiervorrichtung 10 umfasst wenigstens ein Pipettierrohr 12 mit einem darin vorgesehenen Pipettierkanal 14, welcher radial durch ein Zylinderrohr 16 begrenzt ist, in dem ein Kolben 18 durch einen Motor 20 über eine Kolbenstange 22 längs der Pipettierachse P verlagerbar aufgenommen sein kann.

Statt eines verlagerbaren Kolbens 18 kann das Pipettierrohr 12 mit einer beliebigen anderen Druckveränderungsvorrichtung zur Veränderung des Drucks eines Arbeitsfluids im Pipettierkanal 14 in an sich bekannter Weise gekoppelt sein. Am kopplungsseitigen Längsende 12a des Pipettierrohrs 12 kann das Zylinderrohr 16 einen Radialflansch 24 aufweisen, auf welchem in an sich bekannter Weise ein elastomerer Ring 26 ruht, welcher um die Pipettierachse P umläuft.

Das Zylinderrohr 16 kann radial außen durch eine Quetschvorrichtung, etwa ein Quetschrohr 28, umgeben sein, welches relativ zum Zylinderrohr 16 längs der Pipettierachse P bewegbar vorgesehen ist, um den Elastomerring 26 zwischen einer entspannten Stellung und einer in Fig. 1 dargestellten in axialer Richtung gequetschten Stellung zu verstellen.

Weiter radial außen kann das Zylinderrohr 16 und somit auch das Quetschrohr 28 durch eine Abstreifvorrichtung, etwa ein Abstreifrohr 30, umgeben sein, welches dazu dient, durch Relatiwerlagerung relativ zum Quetschrohr 16 eine am Pipettierrohr 12 aufgenommene Pipettenspitze 32 axial abzustreifen.

Der Motor 20, wie die Relativbewegungen des Quetschrohrs 28 und des Abstreifrohrs 30 relativ zum Zylinderrohr 16 können durch eine Steuervorrichtung 35 gesteuert werden.

Die Pipettenspitze 32 weist in der Regel an einem dosierseitigen Längsende 32a eine Dosieröffnung 34 auf und weist an einem dem dosierseitigen Längsende 32a entgegengesetzten kopplungsseitigen Längsende 32b in der Regel einen Kopplungsabschnitt 36 auf, welcher mit dem Pipettierrohr 12, etwa durch Anlageeingriff eines Vorsprungs 38 radial innen im Kopplungsabschnitt 36 der Pipettenspitze 32 mit dem Radialflansch 24 des Zylinderrohrs 16 in eine definierte axiale Relativposition bringbar sein kann.

Weiter kann radial innen im Kopplungsabschnitt 36 der Pipettenspitze in an sich bekannter Weise eine Umfangsnut 40 vorgesehen sein, mit welcher der Elastomerring 26 in seiner gequetschten Stellung in Formschlusseingriff bringbar ist, um die Pipettenspitze 32 sicher am Pipettierrohr 12 zu halten und mit diesem zu koppeln.

An der Pipettiervorrichtung 10 kann radial innerhalb des Kopplungsabschnitts 36 der Pipettenspitze 32, etwa am Zylinderrohr 16, genauer beispielsweise am Radialflansch 24, eine Schwingungsanregungsvorrichtung 42 vorgesehen sein, welche über in Fig. 1 nicht dargestellte signal- und energieübertragende Leitungen mit der Steuervorrichtung 35 gekoppelt sein kann.

Alternativ oder zusätzlich kann eine Schwingungsanregungsvorrichtung 44 radial außen an die Pipettenspitze 32 angekoppelt sein, etwa im Bereich des Kopplungsabschnitts 36. Auch diese Schwingungsanregungsvorrichtung 44 kann über eine signal- und energieübertragende Leitungsanordnung 46 mit der Steuervorrichtung 35 in Signal- und Energieübertragungsverbindung stehen.

Dann, wenn an dem Pipettierrohr 12 eine Pipettenspitze 32 angekoppelt ist, befindet sich die Schwingungsanregungseinrichtung 42 in Anlageeingriff mit der Pipettenspitze 32, so dass eine Schwingung der Schwingungsanregungsvorrichtung 42 auf die Pipettenspitze 32 übertragbar ist.

Ebenso ist eine Schwingung der Schwingungsanregungsvorrichtung 44 auf die Pipettenspitze 32 übertragbar.

Vorzugsweise werden als Schwingungsanregungsvorrichtungen 42 und 44 Piezokristalle verwendet, da diese nicht nur zur Schwingungsanregung, sondern auch zur Schwingungserfassung verwendet werden können. Es soll jedoch nicht ausgeschlossen sein, dass von den Schwingungsanregungsvorrichtungen 42 und 44 gesondert ausgebildete Schwingungssensoren radial innen am kopplungsseitigen Längsende 12a des Pipettierrohrs 12 oder/und radial außen an der Pipettenspitze 32 vorgesehen sind.

In Fig. 1 ist ein Zustand gezeigt, in dem die Pipettenspitze 32 mit ihrer Pipettieröffnung 34 mit einer Eintauchtiefe ET in einen Vorrat 48 von Dosierflüssigkeit 50 eingetaucht ist, um daraus Dosierflüssigkeit 50 in ein Aufnahmevolumen 52 im Inneren der Pipettenspitze 32 zu aspirieren. Wie in Fig. 1 zu erkennen ist, ist bereits eine Menge an Dosierflüssigkeit 50 im Aufnahmevolumen 52 der Pipettenspitze 32 vorhanden.

Mit einer Änderung der Menge an Dosierflüssigkeit 50 im Aufnahmevolumen 52 ändert sich das Schwingungsverhalten der Pipettenspitze 32. Aus diesem Grunde ist es grundsätzlich möglich, die im Aufnahmevolumen 52 aufgenommene Menge an Dosierflüssigkeit 50 durch Schwingungsanregung der Pipettenspitze 32 und Erfassen einer angeregten Schwingungsform der Pipettenspitze 32 zu ermitteln.

Überraschenderweise ist dies auch kontinuierlich oder quasi-kontinuierlich bei in Dosierflüssigkeit 50 eingetauchter Pipettenspitze 32 möglich, wie in Fig. 1 dargestellt ist.

Zwar dämpft die Pipettenspitze 32 radial außen benetzende Dosierflüssigkeit 50 des Vorrats 48 eine Schwingung der Pipettenspitze 32, dennoch kann überraschenderweise die im Aufnahmevolumen 52 aufgenommene Ist-Dosierflüssigkeitsmenge sehr genau an eine gewünschte Soll-Dosierflüssigkeitsmenge herangeführt werden.

Hierzu dient die Steuervorrichtung 35 für den Aspirations- oder/und Dispensationsvorgang als Regelvorrichtung. Sie weist bevorzugt einen Datenspeicher 54 auf.

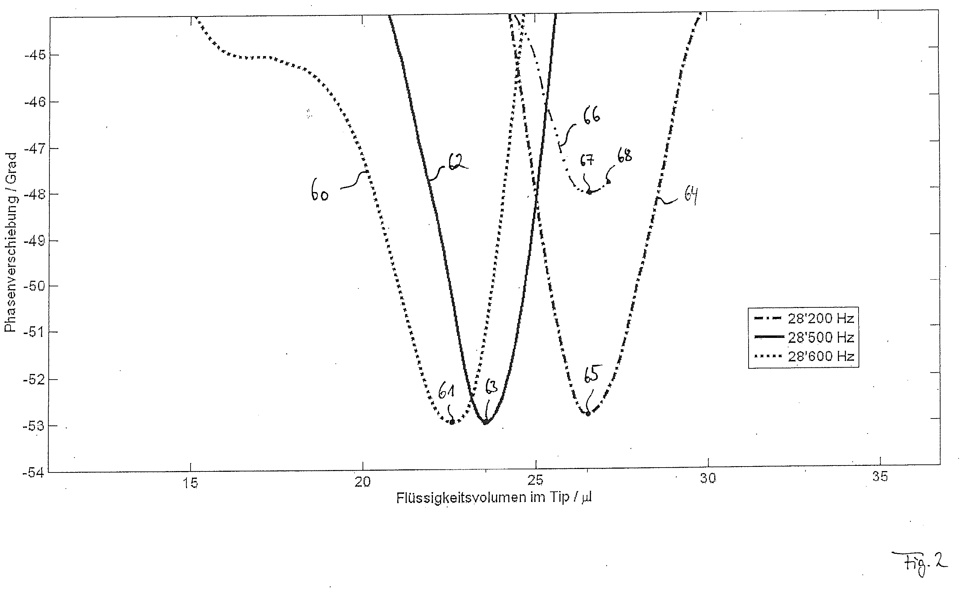

In dem Datenspeicher 54 kann eine Referenzkurvenschar hinterlegt sein, wie sie beispielsweise in Fig. 2 vereinfacht dargestellt ist.

Die Referenzkurvenschar der Fig. 2, welche der Übersichtlichkeit der zeichnerischen Darstellung halber lediglich aus drei beispielhaften Referenzkurven 60, 62 und 64 besteht, enthält Referenzkurven, von welchen jede einen Zusammenhang einer Phasenverschiebung zwischen der anregenden Schwingungsform und der angeregten Schwingungsform in Abhängigkeit von der im Aufnahmevolumen 52 aufgenommenen Ist-Dosierflüssigkeitsmenge repräsentiert.

Jede der drei Referenzkurven 60, 62 und 64 der Fig. 2 ist bei einer anderen Anregungsfrequenz einer ebenfalls mit der Eintauchtiefe ET als einer Referenzeintauchtiefe in einen Vorrat 48 eingetauchten Pipettenspitze 32 ermittelt worden. Genauer ist die punktiert dargestellte Referenzkurve 60 bei einer Anregungsfrequenz von 28600 Hz ermittelt worden, die mit durgezogener Linie dargestellte Referenzkurve 62 mit einer Anregungsfrequenz von 28500 Hz und die strichpunktierte Referenzkurve 64 mit einer Anregungsfequenz von 28200 Hz.

Jede Referenzkurve 60, 62 und 64 weist je einen Extrempunkt 61, 63 bzw. 65 auf, und zwar die Referenzkurve 60 einen Extrempunkt 61 bei einer Dosierflüssigkeitsmenge von 22,6 µl, die Refefenzkurve 62 einen Extrempunkt 63 bei einer Dosierflüssigkeitsmenge von 23,6 µl und die Referenzkurve 64 einen Extrempunkt 65 bei einer Dosierflüssigkeitsmenge von 26,5 µl.

Es seien die Referenzkurven 60, 62 und 64 von Fig. 2 allesamt ein- und derselben Schwingungsmode zugeordnet, etwa einer Transversalschwingung der Pipettenspitze 32 orthogonal zur Pipettierachse P. Daneben können weitere Diagramme wie jenes der Fig. 2 mit Referenzkurven der Phasenverschiebung als Funktion der im Aufnahmevolumen 52 aufgenommenen Dosierflüssigkeitsmenge bestehen, welche jeweils einer anderen Schwingungsmode, etwa einer Torsionsschwingung der Pipettenspitze 32 um die Pipettierachse P und einer Longitudinalschwingung der Pipettenspitze 32 längs der Pipettenachse P zugeordnet sind.

Da die Referenzkurven anderer Schwingungsmoden bei gleicher Anregungsfrequenz andere Extrempunkte oder allgemein andere charakteristische Verlaufspunkte aufweisen als die in Fig. 2 Dargestellten, kann man durch Hinzunahme von Referenzkurvenscharen weiterer Schwingungsmoden das Auflösungsvermögen des hier diskutierten Pipetierregelverfahrens erhöhen.

Beispielhaft sei die Aufgabe gestellt, mit der Pipettiervorrichtung 10 von Fig. 1 eine Dosierflüssigkeitsmenge von 26,5 µl zu aspirieren.

Die Steuervorrichtung 35, die in diesem Falle als Regelvorrichtung wirkt, wird innerhalb der Gruppe von Referenzkurvenscharen jene Schar aus Fig. 2 auswählen, da diese eine Referenzkurve aufweist, welche bei der gewünschten Soll-Dosierflüssigkeitsmenge von 26,5 µl einen charakteristischen Verlaufspunkt, nämlich einen Extrempunkt, aufweist. Damit kann für die Pipettenspitze 32 von Fig. 1 eine Schwingungsmode der anzuregenden Schwingung ausgewählt werden. Es handelt sich dabei um die der Referenzkurvenschar von Fig. 2 zugeordneten Schwingungsmode.

Innerhalb der so gewählten Referenzgrößenkurvenschar wird die Steuervorrichtung die Referenzgrößenkurve 64 auswählen, da deren Extrempunkt 64 geeignet ist, den Soll-Dosierflüssigkeitsmengenwert zu repräsentieren.

Wie nachfolgend gezeigt werden wird, kommt es dabei nicht auf den dem Extrempunkt 65 zugeordneten Zahlenwert der Phasenverschiebung an, sondern vielmehr nur darauf, dass der Extrempunkt 65 als solcher auffindbar ist. Die nachfolgend beschriebene Regelung kann also lediglich anhand der qualitativen Eigenschaft der ausgewählten Referenzgrößenkurve, nicht jedoch anhand ihrer quantitativen Eigenschaften erfolgen.

Bei Pipettiervorrichtungen, wie sie die Pipettiervorrichtung 10 von Fig. 1 beispielhaft darstellt, also bei Pipettiervorrichtungen mit wechselbarer Pipettenspitze 32, ist die Güte der Schwingungskopplung zwischen der Schwingungsanregungsvorrichtung 42 oder/und 44 und der Pipettenspitze 32 ein das Schwingungsantwortverhalten der Pipettenspitze 32 beeinflussender Umstand.

Mit Auswahl der Referenzgrößenkurve 64 ist aufgrund des dieser Referenzgrößenkurve zugeordneten Scharparameterwerts von 28200 Hz auch die Anregungsfrequenz bestimmt, mit welcher die Steuervorrichtung 35 die Schwingungsanregungsvorrichtung 42 oder/und 44 während des Aspirationsvorgangs betreibt. Auch die Eintauchtiefe ist festgelegt. Sie ist die Referenzeintauchtiefe, mit welcher die Referenzgrößenkurve 64 ermittelt wurde. Diese Referenzeintauchtiefe ist vorzugsweise im Datenspeicher 54 hinterlegt und aus diesem auslesbar.

Die Pipettenspitze 32 wird also in dem an das Pipettierrohr 12 angekoppelten Zustand in den Vorrat 48 an Dosierflüssigkeit 50 mit der Referenzeintauchtiefe eingetaucht, woraufhin die Steuervorrichtung 35 den Motor 20 in Betrieb setzt, um durch Bewegung des Kolbens 18 von der Pipettieröffnung 34 weg im Aufnahmevolumen 52 gegenüber der Außenumgebung der Pipettenspitze 32 einen Unterdruck zu erzeugen und dadurch Dosierflüssigkeit 50 zu aspirieren.

Während des Aspirationsvorgangs wird kontinuierlich iterativ die Pipettenspitze 32 über die Schwingungsanregungsvorrichung 42 oder/und 44 mit 28200 Hz zu einer Schwingung der Schwingungsmode angeregt, welche der Referenzgrößenkurve 64 zugeordnet ist. Durch die ebenfalls als Schwingungssensoren verwendeten Schwingungsanregungsvorrichtungen 42 oder/und 44 wird die Schwingungsantwort der Pipettenspitze 32 auf die Anregung erfasst, und zwar im hier diskutierten Beispiel in Form der Phasenverschiebung zwischen anregender und angeregter Schwingung. Mit zunehmender Dosierflüssigkeitsmenge im Aufnahmevolumen 52 wird ein tatsächlicher Phasenverschiebungsverlauf 66 erfasst, wie er in Fig. 2 strichpunktpunktiert gezeichnet ist.

Der Aspirationsvorgang wird über den Extrempunkt 67 der erfassten Größenkurve 66 hinaus fortgesetzt, etwa bis zum Punkt 68, um den charakteristischen Verlaufspunkt 67 sicher als Extrempunkt der erfassten Größenkurve 66 zu erkennen, welcher dem Extrempunkt 65 der Referenzgrößenkurve 64 entspricht.

Unabhängig von der Güte der Schwingungskopplung liegt der Extrempunkt 67 der erfassten Größenkurve stets bei dem gewünschten Soll-Dosierflüssigkeitsmengenwert, wenn mit der zugeordneten Anregungsfrequenz von 28200 Hz angeregt wird.

In nachfolgenden Pipettiervorgängen mit wechselnden Pipettenspitzen mag die erfasste Größenkurve 66 steiler oder flacher verlaufen, ihr Extrempunkt wird jedoch stets bei 26,5 µl liegen.

Wenn der Extrempunkt 67 als solcher erkannt ist, wird bei Erreichen etwa des Punktes 68 mit der Aspiration abgebrochen und Dosierflüssigkeit 50 dispensiert, bis die Phasenverschiebung wieder den Extrempunkt 67 erreicht hat. Dann stimmt die Ist-Dosierflüssigkeitsmenge mit der Soll-Dosierflüssigkeitsmenge im Aufnahmevolumen 52 überein.

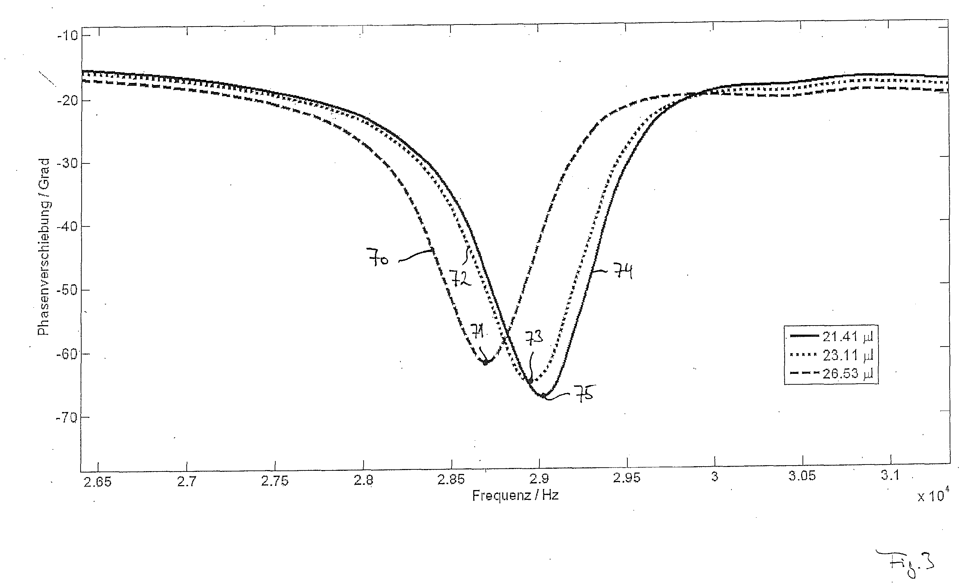

Alternativ oder zusätzlich kann im Speicher 54 der Steuervorrichtung 35 auch die Referenzgrößenkurvenschar von Fig. 3 gespeichert sein, welche wiederum eine von mehreren Referenzgrößenkurvenscharen einer Gruppe von derartigen Scharen sein kann, wie dies zuvor für die Referenzgrößenkurvenschar von Fig. 2 geschildert wurde.

Der Scharparameter der Referenzgrößenkurvenschar von Fig. 3 ist die Dosierflüssigkeitsmenge im Aufnahmevolumen 52. Alle Referenzgrößenkurven 70, 72 und 74 der Schar von Fig. 3 zeigen die Abhängigkeit der Phasenverschiebung zwischen anregender und angeregter Schwingungsform in Abhänigigkeit von der Anregungsfrequenz. Die Referenzgrößenkurvenschar von Figur 3 dient nicht zur Verwendung in einem erfindungsgemäßen Verfahren, sondern nur zur Verwendung in einem von Anspruch 1 nicht gedeckten Anschauungsbeispiel eines Verfahrens.

Die in Fig. 3 strichlinierte Referenzgrößenkurve 70 ist einer Dosierflüssigkeitsmenge von 26,53 µl zugeordnet und wurde mit einer Pipettenspitze ermittelt, in der diese Dosierflüssigkeitsmenge aufgenommen war.

Die punktiert dargestellte Referenzgrößenkurve 72 in Fig. 3 ist einer Dosierflüssigkeitsmenge von 23,11 µl zugeordnet.

Schließlich ist die mit durchgezogener Linie dargestellte Referenzgrößenkurve 74 in Fig. 3 einer Dosierflüssigkeitsmenge von 21,41 µl zugeordnet.

Die Verwendung einer Referenzgrößenkurvenschar gemäß Fig. 3 bietet sich an, wenn stets wiederkehrende gleiche Dosierflüssigkeitsmengen aspiriert oder/und dispensiert werden sollen, so dass für jede Dosierflüssigkeitsmenge eine Referenzgrößenkurve hinterlegt werden kann. Dagegen bietet sich die Referenzgrößenkurvenschar von Fig. 2 an, wenn beliebige Dosierflüssigkeitsmengen aspiriert oder/und dispensiert werden sollen, da mit den Referenzgrößenkurven der Fig. 2 auch interpolierte oder nahe bei aber nicht exakt auf Extrempunkten oder charakteristischen Verlaufspunkten liegende Dosierflüssigkeitsmengenwerte repräsentiert werden können, wenngleich mit geringfügig reduzierter Genauigkeit.

Die Referenzgrößenkurven 70, 72 und 74 von Fig. 3 weisen wiederum Extrempunkte der Phasenverschiebung auf, und zwar die Referenzgrößenkurve 70 einen Extrempunkt 71 bei einem Frequenzwert von 28700 Hz, die Referenzgrößenkurve 72 einen Extrempunkt 73 bei einem Frequenzwert von 28950 Hz und die Referenzgrößenkurve 74 einen Extremwert 75 bei einem Wert von 29020 Hz.

Dann, wenn beispielsweise 26,53 µl einer vorbestimmten Dosierflüssigkeit 50 in eine Pipettenspitze 32 aspiriert werden sollen, wird die Steuervorrichtung 35 in Fig. 3 die Referenzkurve 74 auswählen, deren Scharparameterwert der gewünschten Soll-Dosierflüssigkeitsmenge entspricht. Anhand des der ausgewählten Referenzgrößenkurve 74 zugeordneten Extrempunkts 75 ist die für den Aspirationsvorgang vorteilhafte Anregungsfrequenz von 29020 Hz bestimmt. Weiter kann aus dem Datenspeicher 54 die der Referenzgrößenkurve 74 zugeordnete Referenzeintauchtiefe als die für den Aspirationsvorgang vorteilhafterweise anzuwendende Eintauchtiefe ausgelesen werden.

Anschließend wird die Pipettenspitze 32 mit der Pipettieröffnung 34 in den Vorrat 48 der Dosierflüssigkeit 50 mit der ermittelten Eintauchtiefe eingetaucht und der Aspirationsvorgang begonnen.

Während des Aspirationsvorgangs wird kontinuierlich die Pipettenspitze 32 durch die Schwingungsanregungsvorrichtung 42 oder/und 44 mit 29020 Hz in der der Referenzgrößenkurvenschar von Fig. 3 zugeordneten Schwingungsmode zur Schwingung angeregt. Dabei wird ebenso kontinuierlich iterativ die Phasenverschiebung zwischen anregender und angeregter Schwingungsform erfasst.

Wenn ein Extrempunkt der Phasenverschiebung durch geringfügiges Überaspirieren über den Soll-Dosierflüssigkeitsmengenwert hinaus sicher erkannt ist, wird der Aspirationsvorgang beendet und Dosierflüssigkeit 50 dispensiert, bis der ermittelte Extrempunkt der Phasenverschiebung wieder erreicht ist. Dann sind 26,53 µl Dosierflüssigkeit 50 im Aufnahmevolumen 52 der Pipettenspitze 32 vorhanden. Da die Menge an Dosierflüssigkeit 50 im Vorrat 48 im dargestellten Beispiel wenigstens um eine Größenordnung größer ist als die im Aufnahmevolumen 52 aufgenommene Dosierflüssigkeitsmenge, kann der Dosierflüssigkeitsspiegel 51 des Vorrats 48 während des Aspirationsvorgangs als im Wesentlichen konstant angesehen werden, so dass die Pipettenspitze 32 während des Aspirationsvorgangs nicht nachgeführt werden muss, um die Eintauchtiefe ET im Wesentlichen konstant zu halten.

Wiederum ist es dabei gleichgültig, welchen konkreten Wert die Phasenverschiebung an dem festgestellten Extrempunkt aufweist. Es reicht für eine exakte Dosierung völlig aus, den Extrempunkt als solchen zu erkennen.

Anstelle der Phasenverschiebung in den Fig. 2 und 3 kann auch die Schwingungsamplitude über die Dosierflüssigkeitsmenge oder über die Frequenz aufgetragen sein.

Mit dem hier vorgeschlagenen Regelverfahren können Flüssigkeiten aller Art mit großer Genauigkeit aspiriert oder/und dispensiert werden.

## Patentansprüche

1. Verfahren zur Bestimmung einer durch eine Dosieröffnung (34) einer Pipettenspitze (32) in ein Aufnahmevolumen (52) der Pipettenspitze (32) aspirierten oder/und aus dem Aufnahmevolumen (52) der Pipettenspitze (32) dispensierten Menge an Dosierflüssigkeit (50), wobei das Verfahren folgende Schritte umfasst:
- Bereitstellen wenigstens einer Referenzgröße (61, 63, 65; 71, 73, 75) wenigstens einer Referenzschwingungsform,
- Anregen einer Schwingungsform wenigstens eines Schwingungsabschnitts (bei 32b) der Pipettenspitze (32),
- Erfassen wenigstens einer Größe der angeregten Schwingungsform des Schwingungsabschnitts und
- Vergleichen der wenigstens einen erfassten Größe der angeregten Schwingungsform mit der wenigstens einen Referenzgröße (60, 62, 64; 70, 72, 74) der Referenzschwingungsform,
**dadurch gekennzeichnet, dass** das Verfahren ein Regelungsverfahren ist, bei welchem das Bereitstellen der wenigstens einen Referenzgröße (61, 63, 65; 71, 73, 75) folgenden Schritt umfasst:
- Ermitteln der wenigstens einen Referenzgröße (61, 63, 65; 71, 73, 75) derart, dass sie eine gewünschte, zum Ermittlungszeitpunkt von einer im Aufnahmevolumen (52) vorhandenen Ist-Dosierflüssigkeitsmenge abweichende Soll-Dosierflüssigkeitsmenge repräsentiert,
wobei die Schritte des Anregens der Schwingungsform, der Erfassung der wenigstens einen angeregten Größe und des Vergleichs derselben mit der wenigstens einen Referenzgröße (61, 63, 65; 71, 73, 75) iterativ solange während einer Aspiration von Dosierflüssigkeit (50) bei in Dosierflüssigkeit (50) eingetauchter Pipettieröffnung (34) oder während einer Dispensation von Dosierflüssigkeit (50) wiederholt werden, bis die wenigstens eine erfasste Größe mit der wenigstens einen Referenzgröße (61, 63, 65; 71, 73, 75) übereinstimmt, wobei das Verfahren folgenden Schritt umfasst:
- Auswählen einer Referenzgrößenkurve (60, 62, 64; 70, 72, 74) aus einer Schar von Referenzgrößenkurven (60, 62, 64; 70, 72, 74) mit der Anregungsfrequenz als Scharparameter, welche Referenzgrößenkurven Funktionen der Phasenverschiebung zwischen angeregter Schwingungsform und Anregungsschwingungsform in Abhängigkeit von der Dosierflüssigkeitsmenge im Aufnahmevolumen (52) oder/und der Amplitude der angeregten Schwingungsform in Abhängigkeit von der Dosierflüssigkeitsmenge im Aufnahmevolumen (52) sind, derart, dass die Referenzgrößenkurve (60, 62, 64; 70, 72, 74), bei der Soll-Dosierflüssigkeitsmenge einen charakteristischen Verlaufspunkt (61, 63, 65; 71, 73, 75), wie etwa Extrempunkt, Wendepunkt, Terrassenpunkt oder dergleichen, aufweist,
wobei das Ermitteln der wenigstens einen Referenzgröße (61, 63, 65; 71, 73, 75) folgende Unterschritte umfasst:
- Bestimmen des dieser Referenzgrößenkurve (60, 62, 64; 70, 72, 74) zugeordneten charakteristischen Verlaufpunkts (61, 63, 65; 71, 73, 75) als die wenigstens eine Referenzgröße (61, 63, 65; 71, 73, 75),
- Bestimmen der der ausgewählten Referenzgrößenkurve (60, 62, 64) zugeordneten Anregungsfrequenz,
- Auswählen dieser Anregungsfrequenz als der beim Anregen der Schwingungsform zu verwendenden Anregungsfrequenz,
und wobei der Schritt des Vergleichens von erfasster Größe und Referenzgröße (61, 63, 65; 71, 73, 75) folgenden Unterschritt umfasst:
- Bestimmen, ob die erfasste Größe einen Verlaufspunkt (67), wie etwa Extrempunkt, Wendepunkt, Terrassenpunkt oder dgl., aufweist, welcher dem als die wenigstens eine Referenzgröße (61, 63, 65; 71, 73, 75) bestimmten charakteristischen Verlaufspunkt (65) entspricht, wobei hierzu das Aspirieren oder/und Dispensieren von Dosierflüssigkeit (50) zunächst über das Erreichen der Soll-Dosierflüssigkeitsmenge im Aufnahmevolumen (52) hinaus fortgesetzt wird.

2. Verfahren nach Anspruch 1,
**dadurch gekennzeichnet, dass** das Verfahren folgende weitere Schritte umfasst:
- Ermitteln einer der wenigstens einen Referenzgröße (61, 63, 65; 71, 73, 75) zugeordneten Referenzeintauchtiefe der Pipettenspitze (32)
- Einstellen der aktuellen Eintauchtiefe (ET) der Pipettenspitze (32) auf die Referenzeintauchtiefe.

3. Verfahren nach Anspruch 2,
**dadurch gekennzeichnet, dass** das Verfahren folgenden weiteren Schritt umfasst:
- Nachführen der Pipettenspitze (32) während der Aspiration oder/und Dispensation, um die Eintauchtiefe (ET) der Pipettenspitze (32) im Wesentlichen bei der Referenzeintauchtiefe zu halten.

4. Verfahren nach nach einem der vorhergehenden Ansprüche,
**dadurch gekennzeichnet, dass** das Verfahren folgenden Schritt umfasst:
- Auswählen einer Schar von Referenzgrößenkurven (60, 62, 64; 70, 72, 74) aus einer Gruppe von Referenzgrößenkurvenscharen, wobei die Gruppenparameter die Schwingungsmode des Schwingungsabschnitts oder/und die Dosierflüssigkeit ist beziehungsweise sind.

5. Pipettiervorrichtung (10) mit einer Steuervorrichtung (35) als Regelvorrichtung für Aspirations- und Dispensationsvorgänge, welche zur Ausführung des Verfahrens nach einem der vorhergehenden Ansprüche ausgebildet ist.

## Claims

1. A method for determining a quantity of dispensable liquid (50) aspirated through a dispensing opening (34) of a pipette tip (32) into a receiving volume (52) of the pipette tip (32) and/or dispensed out of the receiving volume (52) of the pipette tip (32), the method encompassing the following steps:
- furnishing at least one reference variable (61, 63, 65; 71, 73, 75) of at least one reference oscillation form;
- exciting an oscillation form of at least one oscillation portion (at 32b) of the pipette tip (32);
- detecting at least one variable of the excited oscillation form of the oscillation portion; and
- comparing the at least one detected variable of the excited oscillation form with the at least one reference variable (60, 62, 64; 70, 72, 74) of the reference oscillation form,
**characterized in that** the method is a regulating method in which the furnishing of the at least one reference variable (61, 63, 65; 71, 73, 75) encompasses the following step:
- ascertaining the at least one reference variable (61, 63, 65; 71, 73, 75) in such a way that it represents a desired dispensable liquid quantity setpoint that deviates, at the time of ascertainment, from an actual dispensable liquid quantity present in the receiving volume (52);
the steps of exciting the oscillation form, detecting the at least one excited variable, and comparing the latter with the at least one reference variable (61, 63, 65; 71, 73, 75) being repeated iteratively during an aspiration of dispensable liquid (50) when the pipette opening (34) is immersed into dispensable liquid (50), or during a dispensing of dispensable liquid (50), until the at least one detected variable corresponds to the at least one reference variable (61, 63, 65; 71, 73, 75); the method encompassing the following step:
- selecting a reference variable curve (60, 62, 64; 70, 72, 74) from a family of reference variable curves (60, 62, 64; 70, 72, 74) having the excitation frequency as a family parameter, which reference variable curves are functions of the phase shift between an excited oscillation form and an excitation oscillation form depending on the dispensable liquid quantity in the receiving volume (52) and/or of the amplitude of the excited oscillation form depending on the dispensable liquid quantity in the receiving volume (52), in such a way that the reference variable curve (60, 62, 64; 70, 72, 74) comprises, at the dispensable liquid quantity setpoint, a characteristic profile point (61, 63, 65; 71, 73, 75) such as an extreme point, inflection point, saddle point, or the like,
the ascertaining of the at least one reference variable (61, 63, 65; 71, 73, 75) encompassing the following sub-steps:
- determining, as the at least one reference variable (61, 63, 65; 71, 73, 75), the characteristic profile point (61, 63, 65; 71, 73, 75) associated with that reference variable curve (60, 62, 64; 70, 72, 74);
- determining the excitation frequency associated with the selected reference variable curve (60, 62, 64);
- selecting that excitation frequency as the excitation frequency to be used upon excitation of the oscillation form,
and the step of comparing the detected variable and reference variable (61, 63, 65; 71, 73, 75) encompassing the following sub-step:
- determining whether the detected variable comprises a profile point (67), for example an extreme point, inflection point, saddle point, and the like, that corresponds to the characteristic profile point (65) determined as the at least one reference variable (61, 63, 65; 71, 73, 75), the aspiration and/or dispensing of dispensable liquid (50) being, for that purpose, at first continued beyond the attainment of the dispensable liquid quantity setpoint in the receiving volume (52).

2. The method according to Claim 1,
**characterized in that** the method encompasses the following further steps:
- ascertaining a reference immersion depth of the pipette tip (32) which is associated with the at least one reference variable (61, 63, 65; 71, 73, 75);
- adjusting the current immersion depth (ET) of the pipette tip (32) to the reference immersion depth.

3. The method according to Claim 2,
**characterized in that** the method encompasses the following further step:
- servocontrolling the pipette tip (32) during aspiration and/or dispensing in order to maintain the immersion depth (ET) of the pipette tip (32) substantially at the reference immersion depth.

4. The method according to one of the preceding claims,
**characterized in that** the method encompasses the following step:
- selecting a family of reference variable curves (60, 62, 64; 70, 72, 74) from a group of reference variable curve families, the group parameter being the dispensable liquid and/or the oscillation mode of the oscillation portion.

5. A pipetting apparatus (10) having a control apparatus (35) constituting a regulation apparatus for aspiration and dispensing operations, which is embodied to carry out the method according to one of the preceding claims.

## Revendications

1. Procédé pour déterminer une quantité de liquide de dosage (50) aspirée à travers une ouverture de dosage (34) d'une pointe de pipette (32) dans un volume de réception (52) de la pointe de pipette (32) et/ou distribuée du volume de réception (52) de la pointe de pipette (32), le procédé comprenant les étapes suivantes :
- fournir au moins un paramètre de référence (61, 63, 65; 71, 73, 75) d'au moins une forme de vibration de référence,
- exciter une forme de vibration d'au moins une section de vibration (à 32b) de la pointe de pipette (32),
- détecter au moins un paramètre de la forme de vibration excitée de la section de vibration, et
- comparer ledit au moins un paramètre détecté de la forme de vibration excitée avec ledit au moins un paramètre de référence (60, 62, 64; 70, 72, 74) de la forme de vibration de référence,
**caractérise en ce que** le procédé est un procédé de régulation dans lequel la provision dudit au moins un paramètre de référence (61, 63, 65; 71, 73, 75) comprend l'étape suivante :
- déterminer ledit au moins un paramètre de référence (61, 63, 65; 71, 73, 75) de sorte qu'il représente une quantité de liquide de dosage désirée s'écartant au moment de la détermination d'une quantité réelle de liquide de dosage présent dans le volume de réception (52),
où les étapes de l'excitation de la forme de vibration, de la détection dudit au moins un paramètre excité et de la comparaison de celui-ci avec ledit au moins un paramètre de référence (61, 63, 65; 71, 73, 75) sont répétées itérativement lors d'une aspiration de liquide de dosage (50) avec une ouverture de pipetage (34) immergée dans le liquide de dosage (50) ou lors d'une distribution de liquide de dosage (50) jusqu'à ce que ledit au moins un paramètre détecté correspond audit au moins un paramètre de référence (61, 63, 65; 71, 73, 75), le procédé comprenant l'étape suivante:
- sélecter une courbe de paramètre de référence (60, 62, 64; 70, 72, 74) parmi un ensemble de courbes de paramètre de référence (60, 62, 64; 70, 72, 74) ayant la fréquence d'excitation comme paramètre d'ensemble, lesquelles courbes de paramètre de référence sont des fonctions du déphasage entre la forme de vibration excitée et la forme de vibration d'excitation en fonction de la quantité de liquide de dosage dans le volume de réception (52), et/ou de l'amplitude de la forme de vibration excitée en fonction de la quantité de liquide de dosage dans le volume de réception (52), de sorte que la courbe de paramètre de référence (60, 62, 64; 70, 72, 74) présente pour la quantité de liquide de dosage définie un point de progression caractéristique (61, 63, 65; 71, 73, 75), tel qu'un point extrême, un point d'inflexion, un point de terrasse ou similaire, où la détermination dudit au moins un paramètre de référence (61, 63, 65; 71, 73, 75) comprend les sous-étapes suivantes :
- déterminer le point de progression caractéristique (61, 63, 65; 71, 73, 75) associé à ladite courbe de paramétré de référence (60, 62, 64; 70, 72, 74) comme ledit au moins un paramètre de référence (61, 63, 65; 71, 73, 75),
- déterminer la fréquence d'excitation associée à la courbe de paramètre de référence sélectionnée (60, 62, 64),
- sélectionner ladite fréquence d'excitation comme fréquence d'excitation à utiliser pour exciter la forme de vibration,
et où l'étape de comparaison du paramètre détecté au paramètre de référence (61, 63, 65; 71, 73, 75) comprend la sous-étape suivante :
- déterminer si le paramètre détecté présente un point de progression (67), tel qu'un point extrême, un point d'inflexion, un point de terrasse ou similaire, qui correspond au point de progression caractéristique (65) déterminé comme ledit au moins un paramètre de référence (61, 63, 65; 71, 73, 75), où à cet effet l'aspiration et/ou la distribution du liquide de dosage (50) se poursuit tout d'abord au-delà de la quantité de liquide de dosage définie dans le volume de réception (52).

2. Procédé selon la revendication 1,
**caractérisé en ce que** le procédé comprend les étapes supplémentaires suivantes :
- déterminer une profondeur d'immersion de référence de la pointe de pipette (32) associée audit au moins un paramètre de référence (61, 63, 65; 71, 73, 75)
- régler la profondeur d'immersion actuelle (ET) de la pointe de pipette (32) sur la profondeur d'immersion de référence.

3. Procédé selon la revendication 2,
**caractérisé en ce que** le procédé comprend l'étape supplémentaire suivante :
- poursuivre la pointe de pipette (32) pendant l'aspiration et/ou la distribution pour maintenir la profondeur d'immersion (ET) de la pointe de pipette (32) sensiblement à la profondeur d'immersion de référence.

4. Procédé selon l'une des revendications précédentes,
**caractérisé en ce que** le procédé comprend l'étape suivante :
- sélecter un ensemble de courbes de paramètre de référence (60, 62, 64; 70, 72, 74) parmi un groupe d'ensembles de courbes de paramètre de référence, les paramètres de groupe étant les modes de vibration de la section de vibration et/ou le liquide de dosage.

5. Dispositif de pipetage (10) comportant un dispositif de commande (35) comme dispositif de régulation pour des opérations d'aspiration et de distribution qui est adapté pour exécuter le procédé selon l'une des revendications précédentes.
